# EUROPEAN PATENT SPECIFICATION

(11) **EP 3 152 537 B1**
(45) Date of publication and mention of the grant of the patent: **01.07.2020**
(21) Application number: 15730007.0
(22) Date of filing: 03.06.2015
(51) Int. Cl.: G01J 5/04, G01J 5/02, G01J 5/20, G01J 5/08

(54) **SYSTEMS AND METHODS FOR ENHANCED BOLOMETER RESPONSE**
SYSTEME UND VERFAHREN FÜR ERWEITERTE BOLOMETERREAKTION
SYSTÈMES ET PROCÉDÉS POUR UNE RÉPONSE DE BOLOMÈTRE AMÉLIORÉE

(30) Priority: 04.06.2014 US 201462007738 P
(43) Date of publication of application: 12.04.2017
(73) Proprietor: Flir Systems, Inc., Wilsonville, OR 97070 (US)
(72) Inventor: CANNATA, Robert F., Goleta, CA 93117 (US); PETERS, Kevin, Goleta, CA 93117 (US); FRANKLIN, Patrick, Goleta, CA 93117 (US); DALE, James L., Goleta, CA 93117 (US); MARX, Tommy, Goleta, CA 93117 (US); SHOTT, Craig, Goleta, CA 93117 (US); SALAFIAN, Reza, Goleta, CA 93117 (US); BORNFREUND, Richard E., Goleta, CA 93117 (US); KOTHARI, Saumya, Goleta, CA 93117 (US); KURTH, Eric A., Goleta, CA 93117 (US)
(74) Representative: McKinnon, Alistair James
(86) International application number: PCT/US2015/034081
(87) International publication number: WO 2015/187886

(56) References cited:
- WO-A2-02/055973
- US-A1- 2010 133 536
- US-A1- 2010 148 067
- US-A1- 2011 248 374
- US-A1- 2012 312 992

## Description

### TECHNICAL FIELD

One or more embodiments of the invention relate generally to infrared cameras and, more particularly, to enhancing the bolometer response through optimization of the infrared absorption of the microbolometers for infrared cameras.

### BACKGROUND

As imaging devices become smaller, each light-sensitive element in the imaging devices tend to have a reduced light-collecting area. For this reason, it is desirable to maximize the infrared absorption of each light-sensitive element so that as much of the infrared energy that is incident on the light-sensitive element is collected and detected. However, it can be challenging to improve the absorption of a detector using conventional methods.

As a result, there is a need for improved techniques for enhancing the infrared absorption of light-sensitive elements for imaging devices such as microbolometers for infrared cameras.

WO 02/055973 discloses a microbolometer array with pixels with a thin platform of silicon dioxide having a metal absorber layer, and having a resonant gap with a substrate reflector. The pixel resistor of vanadium oxide has low total resistance with metal contacts on opposite edges.

US 2012/312992 discloses a microbolometer including a bottom multilayered dielectric, having a first silicon oxynitride layer and a second silicon oxynitride layer disposed above the first silicon oxynitride layer, the first and second silicon oxynitride layers having different refractive indices. The microbolometer further includes a detector layer disposed above the bottom multilayered dielectric, the detector layer comprised of a temperature sensitive resistive material, and a top dielectric disposed above the detector layer.

US 2010/148067 discloses an infrared detection pixel employing a bolometer structure. The infrared detection pixel includes a substrate including a read-out integrated circuit (ROIC) and on which a reflection layer for reflecting infrared light is stacked, a bolometer structure formed to be spaced apart from the substrate and including a temperature-sensitive resistive layer, a first metal layer formed in a pattern on one surface of the temperature-sensitive resistive layer, a second metal layer formed in a pattern complementary to the pattern of the first metal layer on the other surface of the temperature-sensitive resistive layer in order to complementarily absorb infrared light, and an insulating layer formed between the temperature-sensitive resistive layer and the first metal layer, and a metal pad receiving a change in resistance of the temperature-sensitive resistive layer according to infrared light absorbed by the first metal layer and the second metal layer from the second metal layer, and transferring the change in resistance to the ROIC.

US 2011/248374 discloses methods for manufacturing uncooled infrared detectors by using foundry-defined silicon-on-insulator (SOI) complementary metal oxide semiconductor (CMOS) wafers, each of which may include a substrate layer, an insulation layer having a pixel region and a wall region surrounding the pixel region, a pixel structure formed on the pixel region of the insulation layer, a wall structure formed adjacent to the pixel structure and on the wall region of the insulation layer, a dielectric layer covering the pixel structure and the wall structure, a pixel mask formed within the dielectric layer and for protecting the pixel structure during a dry etching process, and a wall mask formed within the dielectric layer and for protecting the wall structure during the dry etching process, thereby releasing a space defined between the wall structure and the pixel structure after the dry etching process.

US 2010/133536 discloses a microbolometer infrared detector elements that may be formed and implemented by varying type/s of precursors used to form amorphous silicon-based microbolometer membrane material/s and/or by varying composition of the final amorphous silicon-based microbolometer membrane material/s (e.g., by adjusting alloy composition) to vary the material properties such as activation energy and carrier mobility. The amorphous silicon-based microbolometer membrane material/s materials may include varying amounts of one or more additional and optional materials, including hydrogen, fluorine, germanium, n-type dopants and p-type dopants.

### SUMMARY

It has recently been discovered that, contrary to conventional wisdom, the infrared absorption of a microbolometer may be enhanced by including a metal layer in the light-sensitive portion of the microbolometer. This is contrary to conventional wisdom as one skilled in the art would expect a metal layer in the light-sensitive region of a microbolometer to reflect incident infrared radiation rather than absorb it, thereby reducing the infrared absorption of the microbolometer. However, a microbolometer having a metal layer may improve the absorption of incident infrared radiation compared with conventional microbolometers. Systems and methods are disclosed for providing enhanced infrared absorption microbolometers. The invention is defined in the claims.

A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

FIG. 1 shows a block diagram illustrating a system for capturing images in accordance with an embodiment.
FIG. 2 shows a perspective view illustrating a focal plane array having an enhanced responsivity microbolometer array in accordance with an embodiment.
FIG. 3 shows a top view of a portion of an enhanced absorption microbolometer array in accordance with an embodiment.
FIGS. 4a-4e show cross-sectional views of a portion of an enhanced absorption microbolometer in accordance with various embodiments.
FIG. 5 shows a flow diagram illustrating a method of forming one or more enhanced absorption microbolometers in accordance with an embodiment.
FIG. 6 shows a flow diagram illustrating further details of a method of forming one or more enhanced absorption microbolometers in accordance with an embodiment.

Embodiments of the invention and their advantages are best understood by referring to the detailed description that follows. It should be appreciated that like reference numerals are used to identify like elements illustrated in one or more of the figures.

### DETAILED DESCRIPTION

Systems and methods are disclosed herein to provide enhanced infrared absorption detectors for an infrared detector device. In one embodiment, an enhanced infrared absorption detector may be a microbolometer having a resistive layer sandwiched between two absorber layers and having an absorption enhancing layer on one or both of the two absorber layers that increases the absorption of the microbolometer to infrared radiation in comparison with conventional microbolometers. Having the absorption enhancing layer on both the top and bottom of the microbolometer bridge can improve the absorption of both incident and reflected infrared radiation. The absorption enhancing layer may, for example, be formed from metal. In various embodiments, the infrared detector device may be included in an electronic device or other imaging system.

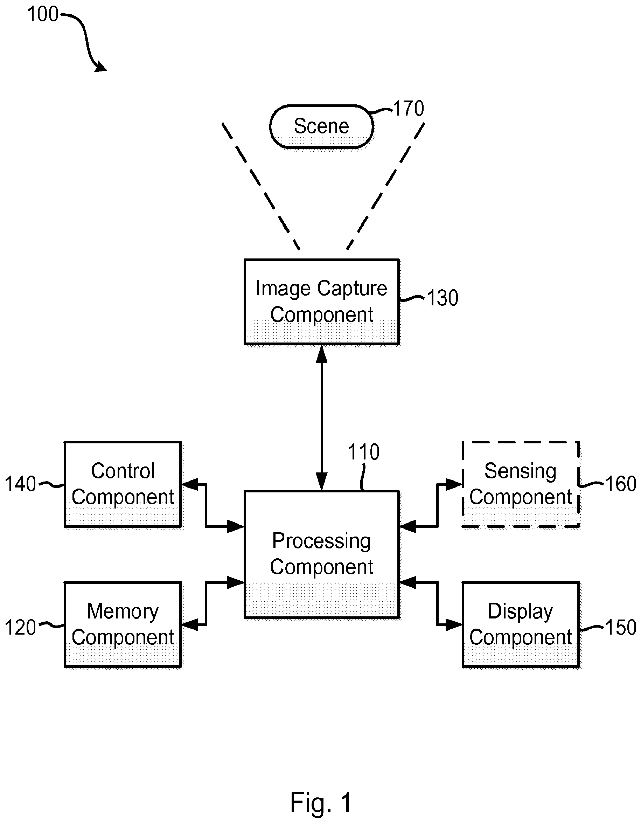

Referring now to FIG. 1, a block diagram is shown illustrating a system 100 (e.g. , an infrared camera) for capturing and processing images in accordance with one or more embodiments. System 100 may include, in one implementation, a processing component 110, a memory component 120, an image capture component 130, a control component 140, and a display component 150. Optionally, system 100 may include a sensing component 160.

System 100 may represent for example an infrared imaging device, such as an infrared camera, to capture and process images, such as video images of a scene 170. The system 100 may represent any type of infrared camera adapted to detect infrared radiation and provide representative data and information (e.g., infrared image data of a scene) or may represent more generally any type of electro-optical sensor system. System 100 may comprise a portable device and may be incorporated, e.g., into a vehicle (e.g., an automobile or other type of land-based vehicle, an aircraft, a marine craft, or a spacecraft) or a non-mobile installation requiring infrared images to be stored and/or displayed or may comprise a distributed networked system.

In various embodiments, processing component 110 may comprise any type of a processor or a logic device (e.g., a programmable logic device (PLD) configured to perform processing functions) . Processing component 110 may be adapted to interface and communicate with components 120, 130, 140, and 150 to perform method and processing steps and/or operations, as described herein such as controlling biasing and other functions (e.g., values for elements such as variable resistors and current sources, switch settings for timing such as for switched capacitor filters, ramp voltage values, etc.) along with conventional system processing functions as would be understood by one skilled in the art.

Memory component 120 comprises, in one embodiment, one or more memory devices adapted to store data and information, including for example infrared data and information. Memory device 120 may comprise one or more various types of memory devices including volatile and non-volatile memory devices. Processing component 110 may be adapted to execute software stored in memory component 120 so as to perform method and process steps and/or operations described herein.

Image capture component 130 comprises, in one embodiment, any type of image sensor, such as for example one or more infrared sensors (e.g., any type of multi-pixel infrared detector, such as a focal plane array with bolometer) for capturing infrared image data (e.g., still image data and/or video data) representative of an image, such as scene 170. In one implementation, the infrared sensors of image capture component 130 provide for representing (e.g., converting) the captured image data as digital data (e.g., via an analog-to-digital converter included as part of the infrared sensor or separate from the infrared sensor as part of system 100). In one aspect, the infrared image data (e.g., infrared video data) may include non-uniform data (e.g., real image data) of an image, such as scene 170. Processing component 110 may be adapted to process the infrared image data (e.g. , to provide processed image data), store the infrared image data in memory component 120, and/or retrieve stored infrared image data from memory component 120. For example, processing component 110 may be adapted to process infrared image data stored in memory component 120 to provide processed image data and information (e.g., captured and/or processed infrared image data).

In various embodiments, image capture component 130 may include an array of enhanced absorption detector elements for detecting, for example, infrared radiation such as thermal radiation. In one embodiment, an enhanced absorption detector element may include a microbolometer having a temperature sensitive resistive layer such as a layer of vanadium oxide (VOx) disposed between two absorber layers (e.g., first and second layers that absorb infrared radiation) and having a metal cap on one of the two absorber layers that increases the absorption of infrared radiation of the microbolometer in comparison with conventional microbolometers. The metal cap may, for example, be formed from an enhancing metal layer.

Control component 140 may include, in one embodiment, a user input and/or interface device, such as a rotatable knob (e.g., potentiometer), push buttons, slide bar, keyboard, etc., that is adapted to generate a user input control signal. Processing component 110 may be adapted to sense control input signals from a user via control component 140 and respond to any sensed control input signals received therefrom. Processing component 110 may be adapted to interpret such a control input signal as a parameter value, as generally understood by one skilled in the art.

In one embodiment, control component 140 may include a control unit (e.g., a wired or wireless handheld control unit) having push buttons adapted to interface with a user and receive user input control values. In one implementation, the push buttons of the control unit may be used to control various functions of the system 100, such as autofocus, menu enable and selection, field of view, brightness, contrast, noise filtering, high pass filtering, low pass filtering, and/or various other features as understood by one skilled in the art.

Display component 150 may include, in one embodiment, an image display device (e.g., a liquid crystal display (LCD) or various other types of generally known video displays or monitors). Processing component 110 may be adapted to display image data and information on the display component 150. Processing component 110 may be adapted to retrieve image data and information from memory component 120 and display any retrieved image data and information on display component 150. Display component 150 may include display electronics, which may be utilized by processing component 110 to display image data and information (e.g., infrared images). Display component 150 may be adapted to receive image data and information directly from image capture component 130 via the processing component 110, or the image data and information may be transferred from memory component 120 via processing component 110.

Optional sensing component 160 may include, in one embodiment, one or more sensors of various types, depending on the application or implementation requirements, as would be understood by one skilled in the art. The sensors of optional sensing component 160 provide data and/or information to at least processing component 110. In one aspect, processing component 110 may be adapted to communicate with sensing component 160 (e.g., by receiving sensor information from sensing component 160) and with image capture component 130 (e.g. , by receiving data and information from image capture component 130 and providing and/or receiving command, control, and/or other information to and/or from one or more other components of system 100).

In various implementations, sensing component 160 may provide information regarding environmental conditions, such as outside temperature, lighting conditions (e.g., day, night, dusk, and/or dawn), humidity level, specific weather conditions (e.g., sun, rain, and/or snow), distance (e.g., laser rangefinder), and/or whether a tunnel or other type of enclosure has been entered or exited. Sensing component 160 may represent conventional sensors as generally known by one skilled in the art for monitoring various conditions (e.g., environmental conditions) that may have an effect (e.g., on the image appearance) on the data provided by image capture component 130.

In some implementations, optional sensing component 160 (e.g., one or more of sensors) may include devices that relay information to processing component 110 via wired and/or wireless communication. For example, optional sensing component 160 may be adapted to receive information from a satellite, through a local broadcast (e.g., radio frequency (RF)) transmission, through a mobile or cellular network and/or through information beacons in an infrastructure (e.g., a transportation or highway information beacon infrastructure), or various other wired and/or wireless techniques.

In various embodiments, components of system 100 may be combined and/or implemented or not, as desired or depending on the application or requirements, with system 100 representing various functional blocks of a related system. In one example, processing component 110 may be combined with memory component 120, image capture component 130, display component 150, and/or optional sensing component 160. In another example, processing component 110 may be combined with image capture component 130 with only certain functions of processing component 110 performed by circuitry (e.g. , a processor, a microprocessor, a logic device, a microcontroller, etc.) within image capture component 130. Furthermore, various components of system 100 may be remote from each other (e.g., image capture component 130 may comprise a remote sensor with processing component 110, etc. representing a computer that may or may not be in communication with image capture component 130).

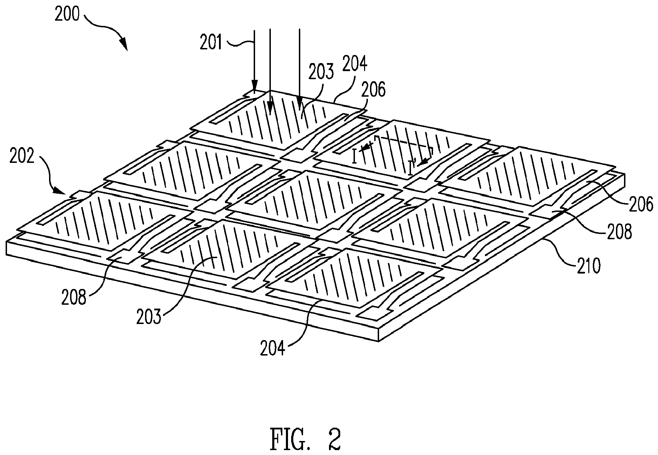

FIG. 2 shows a perspective view illustrating an infrared detector device 200 having an array 202 of infrared detector elements 204 that may be used to capture image data such as infrared image data for, for example, image capture component 130 of FIG. 1. As shown in the example of FIG. 2, array 202 may include coupling members such as legs 206 that couple a bridge portion 203 of each detector element 204 to one or more contacts 208. Each contact 208 may couple one or more associated detector elements 204 to associated readout circuitry of readout integrated circuit (ROIC) 210. According to various embodiments, each contact 208 may be attached to a portion of a leg 206 that bends downward toward ROIC 210 so that contact 208 contacts circuitry in ROIC 210 and/or each contact 208 may include a portion that extends downward from leg 206 to the surface of ROIC 210. Legs 206 may be formed from, for example, titanium, nickel chromium, or other suitable conductive materials.

In one suitable configuration that is sometimes discussed herein as an example, device 200 may be a focal plane array that may be implemented in, for example, image capture component 130 of FIG. 1. Each detector element 204 may be formed from one or more layers of material such as one or more absorber layers, one or more passivation layers, one or more temperature sensitive resistive layers, one or more cap layers, one or more overglass layers, one or more antireflective layers, and/or other layers or elements. In one embodiment, a topmost layer of bridge 203 of each detector element 204 may be an enhancing layer formed from, for example, metal. The enhancing layer may increase the absorption of that detector to infrared radiation such as infrared light 201 (e.g. , by decreasing the minimum wavelength of infrared radiation that is absorbed from, for example, approximately eight microns to, for example, approximately seven microns and/or by increasing the amount of infrared radiation that is absorbed at some or all wavelengths). Each detector element 204 may, for example, be a microbolometer.

In a focal plane array configuration, ROIC 210 may include an ROIC substrate formed from silicon or germanium (as examples) . Detector elements 204 may be arranged to convert incident light such as infrared light 201 into detectable electrical signals based on changes in electrical properties of the detector element (e.g., changes in resistivity) due to changes in temperature of the detector element when the light 201 is incident. Each infrared detector element 204 may be coupled via one of contacts 208 to an associated unit cell (not shown) formed on readout integrated circuit 210 for processing and reading out the electrical signals.

ROIC 210 may incorporate circuitry that is placed in spatial proximity to the detector elements 204 to perform the functions of detector interface and multiplexing. The circuitry associated with a particular microbolometer detector 204 may be located in the substrate directly beneath the detector and may be referred to as the unit cell. ROIC 210 may include an array of unit cells, column amplifiers, a column multiplexer, and a row multiplexer integrated on to a single ROIC silicon die. The microbolometer array 202 may be constructed on top of the unit cell array. ROIC 210 may further include bias generation and timing control circuitry and an output amplifier.

Each microbolometer 204 in the array 202 may communicate with ROIC 210 via legs 206 and contacts 208. For example, a first contact 208 may be used to provide a reference or bias voltage to the microbolometer and a second contact 208 may be used to provide a signal path from the microbolometer to the ROIC by which signals corresponding to infrared light absorbed by the microbolometer can be readout. Further descriptions of ROIC and microbolometer circuits may be found in U.S. Patent No. 6,028,309, which is incorporated by reference in its entirety herein for all purposes.

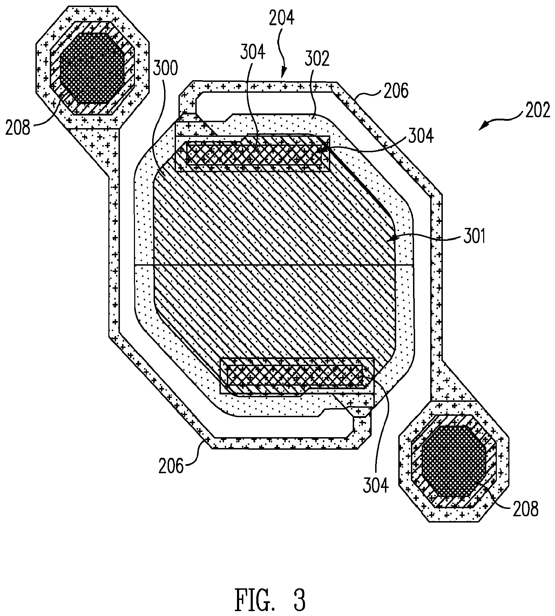

FIG. 3 shows a more detailed physical layout diagram of a portion of a microbolometer array 202 in accordance with an embodiment. Microbolometer array 202 may include an array of microbolometers 204, which may be arranged in rows and columns of detectors. However, it should be understood that microbolometer array 202 is an example of an array (or a portion of an array) in accordance with one or more embodiments.

According to an embodiment, microbolometers 204 may each include a resistive material 300, which may be formed of a high temperature coefficient of resistivity (TCR) material (e.g., vanadium oxide (VOx) or amorphous silicon). Resistive material 300 may be suspended above ROIC 210 on a bridge 302, with resistive material 300 coupled to its contacts 208 via legs 206. Legs 206 may be attached to resistive material 300 through a resistive material contact 304 (e.g., a leg metal to resistive material contact). Resistive material 300 may be covered by one or more other layers of material (e.g., an absorber layer, one or more dielectric layers, and/or an enhancing layer or metal cap). For example, a thin metal layer or metal cap may be formed at or near top surface 301 of microbolometer 204 and may enhance the absorption of microbolometer 204 to incident infrared light.

When light such as infrared light 201 of FIG. 2 is incident on an infrared detector element 204 such as a microbolometer, the light may first reach the enhancing metal layer, may be partially or completely absorbed by the enhancing metal layer, and/or may partially or completely pass through the enhancing layer and be partially or completely absorbed by one or more absorbing layers in the bridge portion of the microbolometer. Some of the light that passes into the bridge portion of the microbolometer may pass through the bridge portion and be reflected by a reflecting metal layer formed beneath the bridge on the readout integrated circuit. Some or all of the reflected light from the reflecting metal layer may again pass from the backside of the bridge portion into the bridge portion of the microbolometer and be partially or completely absorbed by one or more absorbing layers and/or the enhancing metal layer. In some circumstances, multiple reflections between the bridge and the reflecting metal layer on the ROIC may occur.

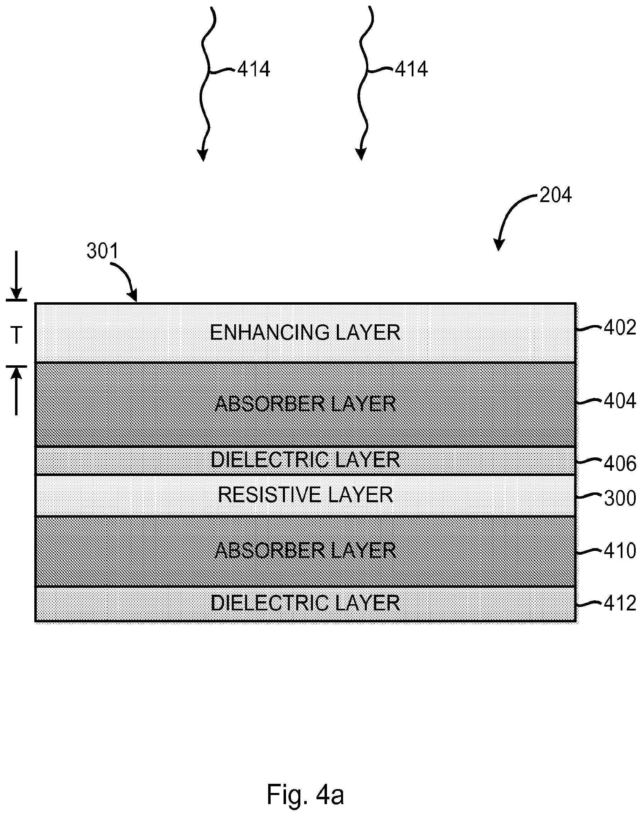

FIGS. 4a-4e show cross-sectional diagrams of a portion of a microbolometer 204 (e.g., along line I-I' of FIG. 2) that may be suspended by bridge 302 of FIG. 3 according to various embodiments. As shown in FIG. 4a, the light-sensitive portion of microbolometer 204 which is not part of the invention, may include multiple layers of material such as resistive layer 300, a first light absorbing layer such as absorber layer 404 disposed on a first side of resistive layer 300, a second light absorbing layer such as absorber layer 410 formed on an opposing second side of resistive layer 300, and an infrared absorption enhancing layer such as enhancing layer 402 formed on the first light absorbing layer 404.

As shown in FIG. 4a, enhancing layer 402 may form a topmost layer of microbolometer 204 so that top surface 301 of microbolometer 204 at which incident light such as infrared light 414 is received by the microbolometer is formed from a top (outer) surface of enhancing layer 402. Enhancing layer 402 may, for example, be a thin layer of metallic material such as an oxidizing metal that forms a metal cap for the microbolometer. For example, enhancing layer 402 may be formed from titanium, titanium oxide, a combination of Ti and TiOx, aluminum, titanium nitride, nickel, iron, zinc, platinum, tantalum, chrome, other transition metals, other metals, alloys of these metals, oxides of these materials and/or a combination of these metals and their oxides.

Enhancing layer 402 may have a thickness T and a composition that provides an enhanced responsivity for microbolometer 204 without affecting other critical behavior and/or performance parameters such as noise requirements for the microbolometer. As examples, thickness T may be between 200 Angstroms and 500 Angstroms, between 295 Angstroms and 305 Angstroms, less than 1500 Angstroms, less than 400 Angstroms, greater than one Angstrom, less than 350 Angstroms, or between 275 and 325 Angstroms. It has been shown that providing a metal layer such as enhancing layer 402 may increase the infrared absorption of microbolometer 204 by as much as or more than ten percent in comparison with conventional microbolometers that do not include an enhancing metal cap layer.

Enhancing layer 402 may be formed using an etch back process, a liftoff process, or other processing methods that, after deposition of a metallic material, leaves a thin film of the metallic material on the top surface of the bridge region of the detector. In one embodiment, enhancing layer 402 may also be formed on some or all of the legs for each microbolometer.

According to the invention, resistive layer 300 comprises a temperature sensitive resistive material. For example, the resistive layer may be formed from vanadium oxide, nickel oxide, alpha-silicon, alpha-SiGe, titanium oxide, molybdenum oxide, and/or a diode element such as p+/n- doped poly-silicon junction. In one example, absorber layers 404 and 410 may be formed from various materials, such as silicon nitride (e.g. , Si₃N₄), silicon dioxide (SiO₂), silicon oxynitride (e.g., SiON), and/or carbon/graphite based absorbers, as would be understood by one of ordinary skill in the art. Further descriptions of suitable absorber layers may be found in U.S. Patent No. 9,029,783.

The structures of microbolometer 204 shown in FIG. 4a are merely illustrative. For example, in one embodiment, microbolometer 204 may include a first dielectric layer 406 disposed between absorber layer 404 and resistive layer 300 and a second dielectric layer 412 disposed on the bottom of resistive layer 300 and absorber layer 410 as shown in FIG. 4a. However, this is merely illustrative. In various embodiments, microbolometer 204 may include enhancing layer 402, resistive layer 300, at least one infrared absorbing layer, and any suitable combination of other layers such as passivation layers, antireflection layers, multilayer absorbing layers (e.g., one or more absorbing layers disposed above and/or below the resistive layer having various indices of refraction and formed form the same and/or different materials), dielectric layers such as dielectric layers 406 and/or 412, and/or other suitable layers.

In one example, dielectric layers 406 and 412 may be formed from silicon dioxide (Si0₂). In some embodiments, absorber layers 404 and/or 410 may each include multiple layers of material including silicon nitride, silicon oxynitride, silicon oxide or other suitable absorbing materials. In certain embodiments, absorber layers 404 and/or 410 are formed from one or more absorbing dielectric materials such as silicon nitride.

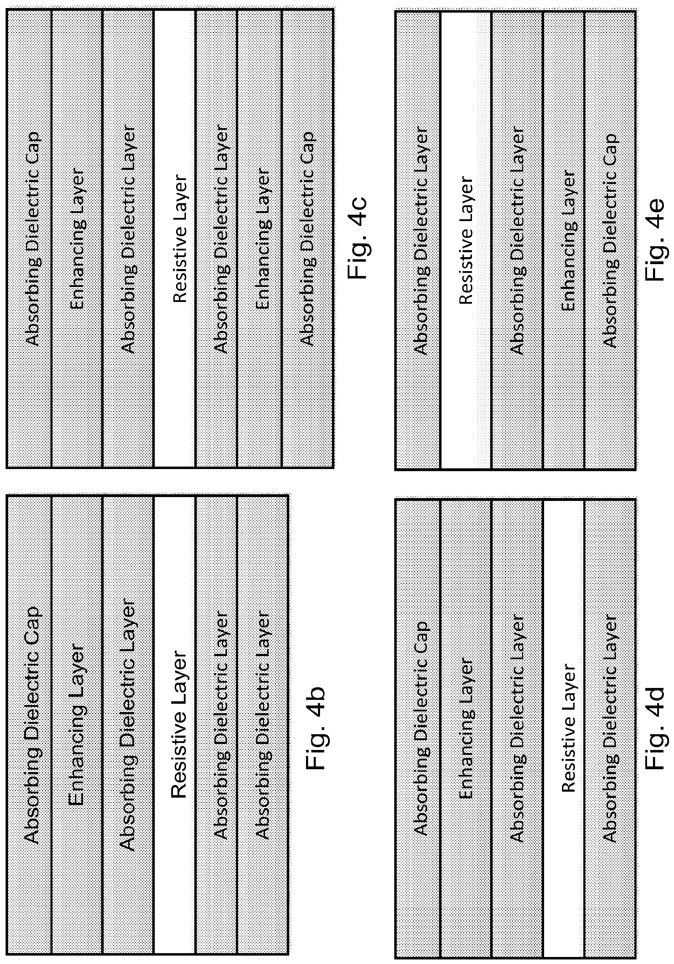

FIGS. 4b-4e illustrate embodiments of a portion of an enhanced absorption microbolometer. As shown in FIGS. 4b-4e, the light-sensitive portion of microbolometer 204 may include multiple layers of material such as resistive layer 300, a first light absorbing layer such as absorbing dielectric layer 404 disposed on a first side of resistive layer 300, a second light absorbing layer such as absorbing dielectric layer 410 or absorbing dielectric cap 416 formed on an opposing second side of resistive layer 300, and an infrared absorption enhancing layer such as enhancing layer 402. In the embodiment of FIG. 4b, an additional absorbing dielectric layer 418 is provided. In various embodiments, the enhancing layer 402 may be fully or partially encapsulated with an absorbing dielectric material, e.g., absorbing dielectric cap 416.

As can be seen from the figures, the enhancing layer 402 may be disposed at various locations in the stack, and may be disposed at multiple locations. For example, FIGS. 4b and 4c show the enhancing layer 402 near the top of the stack, while FIG. 4d shows the enhancing layer 402 near the bottom of the stack. FIG. 4c shows two enhancing layers 402 in the stack, one layer near the top and a second layer at the bottom of the stack.

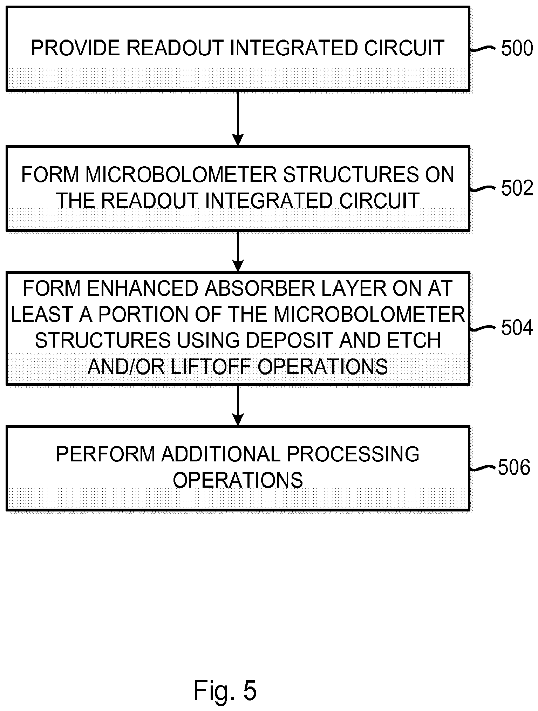

FIG. 5 is a flowchart of illustrative operations that may be performed for fabricating a device such an infrared imaging device such as device 200 of FIG. 2 having enhanced infrared absorption microbolometers such as microbolometers 204 of FIGS. 2, 3, and 4a-4e.

At block 500, a substrate such as a readout integrated circuit substrate for an infrared detector device such as a focal plane array may be provided.

At block 502, microbolometer structures such as an array of microbolometer bridges suspended on legs that couple the bridges to corresponding contacts on the ROIC substrate may be formed. Forming the microbolometer structures may include various photomasking, etching, deposition, patterning, liftoff and/or other suitable processes. Forming the microbolometer structures may include incorporating a sacrificial layer in or among the microbolometer structures.

At block 504, an enhanced absorber layer such as enhancing layer 402 of FIG. 4 may be formed on at least a portion of the microbolometer structures using deposit and etch processes and/or liftoff operations. For example, the enhanced absorber layer may be formed on a light-sensitive portion of the microbolometer that is to be suspended above the ROIC substrate by the microbolometer bridge. In some embodiments, the enhanced absorber layer may be formed on some or all of the leg structures of the microbolometer.

At block 506, additional processing operations may be performed to form the focal plane array. For example, additional processing operations may include removing (e.g. , by etching) the sacrificial layer to release the microbolometers and leave the bridge portions and some or all of the legs suspended above the ROIC. Additional processing operations may include other operations such as wafer dicing operations, other wafer level packaging (WLP) processes, coating operations, testing operations and/or other suitable operations. For example, a focal plane array having microbolometers with enhanced absorbing layers may be incorporated in a microbolometer vacuum package assembly (VPA) using WLP techniques such as those described in U.S. Provisional Patent Application No. 61/801,596 and U.S. Provisional Patent Application No. 61/469, 651.

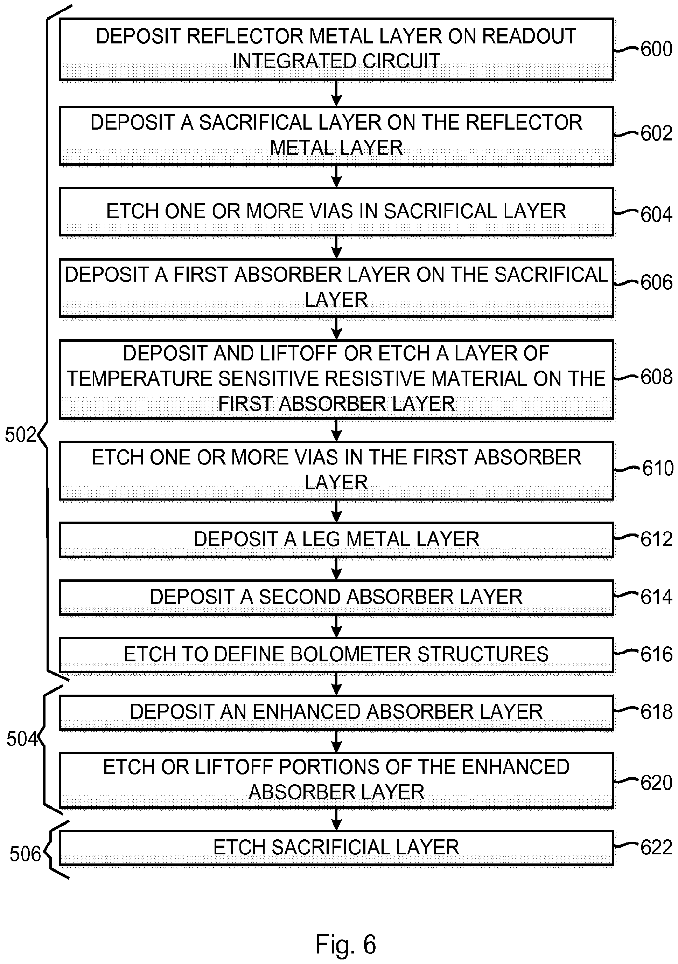

FIG. 6 is a flowchart showing further details of illustrative operations of FIG. 5 according to an embodiment. For example, the operations described above in connection with block 502 of FIG. 5 may include the operations described below in connection with blocks 600-616. For example, the operations described above in connection with block 504 of FIG. 5 may include the operations described below in connection with blocks 618-620, and the operations described above in connection with block 506 of FIG. 5 may include the operations described below in connection with block 622.

At block 600, a metal layer such as a reflector metal layer may be formed on a substrate such as a readout integrated circuit substrate.

At block 602, a sacrificial layer such as a layer of polyimide may be deposited over the reflector metal layer.

At block 604, one or more openings (e.g. , vias) may be formed (e.g., etched) in the sacrificial layer to be used for coupling detector elements to the readout integrated circuit.

At block 606, a first absorbing dielectric layer such as a layer of silicon nitride (e.g., Si₃N₄) may be deposited on the sacrificial layer. If desired, one or more additional layers such as a first dielectric layer (e.g., a silicon oxide layer) may optionally be deposited on the sacrificial layer prior to depositing the first absorbing dielectric layer so that the first absorbing dielectric layer is deposited over the first dielectric layer and on one or more of the additional layers. In some embodiments, a metal enhancing layer may be formed over the first absorbing dielectric layer.

At block 608, a layer of temperature dependent resistive material such as vanadium oxide may be deposited on the first absorbing dielectric layer. Portions of the temperature dependent resistive material may then be removed in an etch or liftoff operation to define light sensitive portions of the microbolometer array.

At block 610, one or more openings (e.g., vias) maybe formed (e.g., etched) in the first absorbing dielectric layer to remove portions of the first absorbing dielectric layer disposed within the openings formed at block 604.

At block 612, a layer of leg metal material may be deposited (e.g., on portions of the first absorbing dielectric layer, the layer of temperature sensitive resistive material, and/or the sacrificial layer). The leg metal material may, for example, include titanium, nickel chromium, and/or other suitable conductive materials.

At block 614, a second absorbing dielectric layer such as a second layer of silicon nitride (e.g., Si₃N₄) may be deposited over the layer of temperature dependent resistive material. The second absorbing dielectric layer may be deposited on portions of the leg metal material and/or the temperature sensitive resistive material. If desired, one or more additional layers such as a second dielectric layer (e.g., a second silicon oxide layer) may optionally be deposited (e.g., on portions of the leg metal material and/or the temperature sensitive resistive material) prior to depositing the second absorbing dielectric layer so the second absorbing dielectric layer is deposited over the layer of temperature dependent resistive material and on one or more of the additional layers.

At block 616, an etch process may be performed to remove portions of the leg metal layer and/or other layers to define the microbolometer legs and bridges as would be understood by one skilled in the art.

At block 618, an enhanced absorber layer such as a thin layer (e.g. , a layer having a thickness of between 10 Angstroms and 1500 Angstroms) of oxidizing metal (e.g., titanium, a titanium oxide, a combination of Ti and TiOx, aluminum, titanium nitride, nickel, iron, zinc, platinum, tantalum, chrome, other metals, alloys of these metals, and/or combinations of these material and their oxides) may be deposited on the microbolometer structures.

At block 620, portions of the enhanced absorber layer may be removed by performing an etch and/or a liftoff process to remove portions of the enhanced absorber layer and to leave portions of the enhanced absorber layer within the bridge portion and/or the leg portion of the microbolometers. In this way, a metal cap such as a titanium and/or TiOx cap may be formed on each microbolometer, thereby enhancing the responsivity of the microbolometer.

At block 622, the sacrificial layer may be removed (e.g., in an etch process) to release the enhanced responsivity microbolometers of the focal plane array. A space such as an air gap may be generated between the microbolometer bridge and leg portions and the reflector metal layer by the removal of the sacrificial layer.

As would be understood by one skilled in the art, at various stages during the processes of FIG. 6, other layers such as passivation layers, photoresist layers, additional sacrificial layers, antireflection layers, and/or other suitable layers may be deposited, patterned and/or removed in whole or in part to form, for example, the structures of FIGS. 4a-4e.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A microbolometer (204), comprising:
a bridge, comprising:
a temperature sensitive resistive layer (300);
one or more absorbing dielectric layers (404, 410) above and below the temperature sensitive resistive layer;
one or more enhancing metal layers (402) electrically isolated from the temperature sensitive resistive layer and above and/or below the absorbing dielectric layers; and
an absorbing dielectric cap (416) disposed above and/or below the one or more enhancing metal layers, wherein each of the enhancing metal layers is between and in contact with the absorbing dielectric cap (416) and one of the absorbing dielectric layers (404,410).

2. The microbolometer (204) of claim 1, wherein at least one of the one or more enhancing metal layers (402) comprises a metal that is disposed at or near a top surface of the bridge and/or at or near a bottom surface of the bridge.

3. The microbolometer (204) of claim 1, wherein the one or more enhancing metal layers (402) include a stack of a transition metal and an oxide of the transition metal.

4. The microbolometer (204) of claim 3, wherein the one or more enhancing metal layers (402) includes a stack of titanium and titanium oxide.

5. The microbolometer (204) of claim 1, wherein:
the temperature sensitive resistive layer comprises a vanadium oxide, nickel oxide, alpha-silicon, alpha-SiGe, titanium oxide, molybdenum oxide, and/or a diode element;
the microbolometer is one of a plurality of microbolometers that form a focal plane array;
the one or more enhancing metal layers (402) comprise one or more transition metals; and
the one or more enhancing metal layers have a thickness of between 10 Angstroms and 1500 Angstroms.

6. An infrared camera (100), comprising:
a focal plane array (200) comprising the microbolometer (204) of claim 1; and
a readout integrated circuit (210), wherein the bridge is coupled to and suspended above the readout integrated circuit by at least one leg, and wherein the temperature sensitive resistive layer (300) is interposed between the metal layer (402) and the readout integrated circuit.

7. The microbolometer (204) of claim 1, further comprising:
a second absorbing dielectric cap (416) that fully or partially encapsulates a second enhancing metal layer of the one or more enhancing metal layers, wherein the second enhancing metal layer is formed over at least one of the absorbing dielectric layers.

8. A method, comprising:
forming a first enhancing metal layer (402) on a readout integrated circuit substrate;
forming a sacrificial layer on the first enhancing metal layer;
forming one or more first absorbing dielectric layers (404) over the sacrificial layer;
forming a temperature sensitive resistive layer (300) on the one or more first absorbing dielectric layers;
forming a second absorbing dielectric layer (410) on the temperature sensitive resistive layer;
forming a second enhancing metal layer (402) on the first and/or second absorbing dielectric layer on a side opposite the temperature sensitive resistive layer;
forming an absorbing dielectric cap (416) on the second enhancing metal layer, wherein the second enhancing metal layer is between and in contact with the first and/or second absorbing dielectric layer and the absorbing dielectric cap; and
removing the sacrificial layer to form a microbolometer.

9. The method of claim 8, further comprising removing portions of the second enhancing metal layer (402).

10. The method of claim 9, wherein the removing comprises etching the second enhancing metal layer (402) or lifting off the portions of the second enhancing metal layer.

11. The method of claim 8, further comprising etching and/or lift off of the temperature sensitive resistive layer (300).

12. The method of claim 11, further comprising:
depositing a leg metal layer on the one or more first absorbing dielectric layers (404); and
etching and/or lift off of the leg metal layer.

13. The method of claim 8, further comprising:
prior to depositing the second enhancing metal layer (402), performing etching operations to define bridge portions and leg portions of an array of microbolometers,
wherein the temperature sensitive resistive layer (300) comprises a vanadium oxide, and wherein the second enhancing metal layer comprises a titanium layer having a thickness of between 10 Angstroms and 1500 Angstroms.

14. An imaging device, comprising:
an array of microbolometers (204), wherein the microbolometers are as set forth in claim 1; and
a readout integrated circuit (210), wherein each of the microbolometers is suspended over associated processing circuitry in the readout integrated circuit by at least one metal leg.

15. A method of using the imaging device of claim 14, comprising:
providing a bias voltage to each of the microbolometers from the readout integrated circuit; and
receiving a signal from each of the microbolometers at the readout integrated circuit, wherein the signal from each microbolometer corresponds to an amount of infrared light absorbed by that microbolometer, wherein the first enhancing metal layer comprises a titanium layer having a thickness of between 10 Angstroms and 1500 Angstroms.

## Patentansprüche

1. Mikrobolometer (204), das Folgendes umfasst:
eine Brücke, die Folgendes umfasst:
eine temperaturempfindliche Widerstandsschicht (300);
eine oder mehrere absorbierende dielektrische Schichten (404, 410) über und unter der temperaturempfindlichen Widerstandsschicht;
eine oder mehrere Verstärkungsmetallschichten (402), die von der temperaturempfindlichen Widerstandsschicht und über und/oder unter den absorbierenden dielektrischen Schichten elektrisch isoliert sind; und
eine absorbierende dielektrische Kappe (416), die über und/oder unter den ein oder mehreren Verstärkungsmetallschichten angeordnet ist, wobei jede der Verstärkungsmetallschichten zwischen und in Kontakt mit der absorbierenden dielektrischen Kappe (416) und einer der absorbierenden dielektrischen Schichten (404, 410) ist.

2. Mikrobolometer (204) nach Anspruch 1, wobei wenigstens eine der ein oder mehreren Verstärkungsmetallschichten (402) ein Metall umfasst, das an oder nahe einer Oberseite der Brücke und/oder an oder nahe einer Unterseite der Brücke angeordnet ist.

3. Mikrobolometer (204) nach Anspruch 1, wobei die ein oder mehreren Verstärkungsmetallschichten (402) einen Stapel aus einem Übergangsmetall und einem Oxid des Übergangsmetalls beinhalten.

4. Mikrobolometer (204) nach Anspruch 3, wobei die ein oder mehreren Verstärkungsmetallschichten (402) einen Stapel aus Titan und Titanoxid beinhalten.

5. Mikrobolometer (204) nach Anspruch 1, wobei:
die temperaturempfindliche Widerstandsschicht Vanadiumoxid, Nickeloxid, Alpha-Silicium, Alpha-SiGe, Titanoxid, Molybdänoxid und/oder ein Diodenelement umfasst;
das Mikrobolometer eines von mehreren Mikrobolometem ist, die ein Fokalebenen-Array bilden;
die ein oder mehreren Verstärkungsmetallschichten (402) ein oder mehrere Übergangsmetalle umfassen; und
die ein oder mehreren Verstärkungsmetallschichten eine Dicke zwischen 10 Ängström und 1500 Ängström haben.

6. Infrarotkamera (100), die Folgendes umfasst:
ein Fokalebenen-Array (200), das ein Mikrobolometer (204) nach Anspruch 1 umfasst; und
eine integrierte Ausleseschaltung (210), wobei die Brücke mit der integrierten Ausleseschaltung durch wenigstens einen Schenkel gekoppelt und darüber aufgehängt ist, und wobei die temperaturempfindliche Widerstandsschicht (300) sich zwischen dem Metallschicht (402) und der integrierten Ausleseschaltung befindet.

7. Mikrobolometer (204) nach Anspruch 1, das ferner Folgendes umfasst:
eine zweite absorbierende dielektrische Kappe (416), die eine zweite Verstärkungsmetallschicht der ein oder mehreren Verstärkungsmetallschichten ganz oder teilweise verkapselt, wobei die zweite Verstärkungsmetallschicht über wenigstens einer der absorbierenden dielektrischen Schichten ausgebildet ist.

8. Verfahren, das Folgendes beinhaltet:
Ausbilden einer ersten Verstärkungsmetallschicht (402) auf einem integrierten Ausleseschaltungssubstrat;
Ausbilden einer Opferschicht auf der ersten Verstärkungsmetallschicht;
Ausbilden von einer oder mehreren ersten absorbierenden dielektrischen Schichten (404) über der Opferschicht;
Ausbilden einer temperaturempfindlichen Widerstandsschicht (300) auf den ein oder mehreren ersten absorbierenden dielektrischen Schichten;
Ausbilden einer zweiten absorbierenden dielektrischen Schicht (410) auf der temperaturempfindlichen Widerstandsschicht;
Ausbilden einer zweiten Verstärkungsmetallschicht (402) auf der ersten und/oder zweiten absorbierenden dielektrischen Schicht auf einer Seite gegenüber der temperaturempfindlichen Widerstandsschicht;
Ausbilden einer absorbierenden dielektrischen Kappe (416) auf der zweiten Verstärkungsmetallschicht, wobei die zweite Verstärkungsmetallschicht zwischen und in Kontakt mit der ersten und/oder zweiten absorbierenden dielektrischen Schicht und der absorbierenden dielektrischen Kappe ist; und
Entfernen der Opferschicht zum Bilden eines Mikrobolometers.

9. Verfahren nach Anspruch 8, das ferner das Entfernen von Teilen der zweiten Verstärkungsmetallschicht (402) beinhaltet.

10. Verfahren nach Anspruch 9, wobei das Entfernen das Ätzen der zweiten Verstärkungsmetallschicht (402) oder das Abheben der Teile der zweiten Verstärkungsmetallschicht beinhaltet.

11. Verfahren nach Anspruch 8, das ferner das Ätzen und/oder Abheben der temperaturempfindlichen Widerstandsschicht (300) beinhaltet.

12. Verfahren nach Anspruch 11, das ferner Folgendes beinhaltet:
Absetzen einer Schenkelmetallschicht auf den ein oder mehreren ersten absorbierenden dielektrischen Schichten (404); und
Ätzen und/oder Abheben der Schenkelmetallschicht.

13. Verfahren nach Anspruch 8, das ferner Folgendes beinhaltet:
Durchführen, vor dem Absetzen der zweiten Verstärkungsmetallschicht (402), von Ätzoperationen zum Definieren von Brückenabschnitten und Schenkelabschnitten eines Array von Mikrobolometern;
wobei die temperaturempfindliche Widerstandsschicht (300) ein Vanadiumoxid umfasst und wobei die zweite Verstärkungsmetallschicht eine Titanschicht mit einer Dicke zwischen 10 Ängström und 1500 Ängström umfasst.

14. Bildgebungsvorrichtung, die Folgendes umfasst:
ein Array von Mikrobolometern (204), wobei die Mikrobolometer Anspruch 1 entsprechen; und
eine integrierte Ausleseschaltung (210), wobei jedes der Mikrobolometer durch wenigstens einen Metallschenkel über assoziierter Verarbeitungsschaltung in der integrierten Ausleseschaltung aufgehängt ist.

15. Verfahren zum Verwenden der Bildgebungsvorrichtung nach Anspruch 14, das Folgendes beinhaltet:
Anlegen einer Vorspannung an jedes der Mikrobolometer von der integrierten Ausleseschaltung; und
Empfangen eines Signals von jedem der Mikrobolometer an der integrierten Ausleseschaltung, wobei das Signal von jedem Mikrobolometer einer Menge an von diesem Mikrobolometer absorbiertem Infrarotlicht entspricht, wobei die erste Verstärkungsmetallschicht eine Titanschicht mit einer Dicke zwischen 10 Ängström und 1500 Ängström hat.

## Revendications

1. Microbolomètre (204), comprenant :
un pont, comprenant :
une couche résistive sensible à la température (300) ;
une ou plusieurs couches diélectriques absorbantes (404, 410) au-dessus et au-dessous de la couche résistive sensible à la température ;
une ou plusieurs couches métalliques d'amélioration (402) isolées électriquement de la couche résistive sensible à la température et au-dessus et/ou au-dessous des couches diélectriques absorbantes ; et
un embout diélectrique absorbant (416) disposé au-dessus et/ou au-dessous des une ou plusieurs couches métalliques d'amélioration, chacune des couches métalliques d'amélioration étant entre l'embout diélectrique absorbant (416) et une des couches diélectriques absorbantes (404, 410), et en contact avec ceux-ci.

2. Microbolomètre (204) selon la revendication 1, dans lequel au moins une des une ou plusieurs couches métalliques d'amélioration (402) comprend un métal qui est disposé au niveau ou à proximité d'une surface supérieure du pont et/ou au niveau ou à proximité d'une surface inférieure du pont.

3. Microbolomètre (204) selon la revendication 1, dans lequel les une ou plusieurs couches métalliques d'amélioration (402) incluent un empilement d'un métal de transition et d'un oxyde du métal de transition.

4. Microbolomètre (204) selon la revendication 3, dans lequel les une ou plusieurs couches métalliques d'amélioration (402) incluent un empilement de titane et d'oxyde de titane.

5. Microbolomètre (204) selon la revendication 1, dans lequel :
la couche résistive sensible à la température comprend un oxyde de vanadium, un oxyde de nickel, un silicium alpha, un SiGe alpha, un oxyde de titane, un oxyde de molybdène et/ou un élément diode ;
le microbolomètre est un d'une pluralité de microbolomètres qui forment un réseau plan-focal ;
les une ou plusieurs couches métalliques d'amélioration (402) comprennent un ou plusieurs métaux de transition ; et
les une ou plusieurs couches métalliques d'amélioration ont une épaisseur comprise entre 10 Angstroms et 1500 Angstroms.

6. Caméra infrarouge (100), comprenant :
un réseau plan-focal (200) comprenant le microbolomètre (204) selon la revendication 1 ; et
un circuit intégré de lecture (210), le pont étant couplé au circuit intégré de lecture et suspendu au-dessus de celui-ci par au moins une branche, et la couche résistive sensible à la température (300) étant interposée entre la couche métallique (402) et le circuit intégré de lecture.

7. Microbolomètre (204) selon la revendication 1, comprenant en outre :
un second embout diélectrique absorbant (416) qui encapsule totalement ou partiellement une seconde couche métallique d'amélioration des une ou plusieurs couches métalliques d'amélioration, la seconde couche métallique d'amélioration étant formée sur au moins une des couches diélectriques absorbantes.

8. Procédé comprenant les étapes consistant à :
former une première couche métallique d'amélioration (402) sur un substrat de circuit intégré de lecture ;
former une couche sacrificielle sur la première couche métallique d'amélioration ;
former une ou plusieurs premières couches diélectriques absorbantes (404) sur la couche sacrificielle ;
former une couche résistive sensible à la température (300) sur les une ou plusieurs premières couches diélectriques absorbantes ;
former une seconde couche diélectrique absorbante (410) sur la couche résistive sensible à la température ;
former une seconde couche métallique d'amélioration (402) sur la première et/ou la seconde couche diélectrique absorbante sur un côté opposé de la couche résistive sensible à la température ;
former un embout diélectrique absorbant (416) sur la seconde couche métallique d'amélioration, la seconde couche métallique d'amélioration étant entre la première et/ou la seconde couche diélectrique absorbante et l'embout diélectrique absorbant, et en contact avec ceux-ci ; et
retirer la couche sacrificielle pour former un microbolomètre.

9. Procédé selon la revendication 8, comprenant en outre l'étape à retirer des parties de la seconde couche métallique d'amélioration (402).

10. Procédé selon la revendication 9, dans lequel le retrait comprend l'étape consistant à graver la seconde couche métallique d'amélioration (402) ou à décoller les parties de la seconde couche métallique d'amélioration.

11. Procédé selon la revendication 8, comprenant en outre les étapes consistant à graver et/ou décoller la couche résistive sensible à la température (300).

12. Procédé selon la revendication 11, comprenant en outre les étapes consistant à :
déposer une couche métallique formant branche sur les une ou plusieurs premières couches diélectriques absorbantes (404) ; et
graver et/ou décoller la couche métallique formant branche.

13. Procédé selon la revendication 8, comprenant en outre l'étape consistant à :
avant de déposer la seconde couche métallique d'amélioration (402), réaliser des opérations de gravure pour définir des parties pont et des parties branche d'un réseau de microbolomètres,
la couche résistive sensible à la température (300) comprenant un oxyde de vanadium et la seconde couche métallique d'amélioration comprenant une couche de titane ayant une épaisseur comprise entre 10 Angstroms et 1500 Angstroms.

14. Dispositif d'imagerie, comprenant :
un réseau de microbolomètres (204), les microbolomètres étant comme ceux décrits selon la revendication 1 ; et
un circuit intégré de lecture (210), chacun des microbolomètres étant suspendu sur une circuiterie de traitement associée dans le circuit intégré de lecture par au moins une branche métallique.

15. Procédé d'utilisation du dispositif d'imagerie selon la revendication 14, comprenant les étapes consistant à :
fournir une tension de polarisation à chacun des microbolomètres à partir du circuit intégré de lecture ; et
recevoir un signal en provenance de chacun des microbolomètres au niveau du circuit intégré de lecture, le signal en provenance de chacun des microbolomètres correspondant à une quantité de lumière infrarouge absorbée par ce microbolomètre, la première couche métallique d'amélioration comprenant une couche de titane ayant une épaisseur comprise entre 10 Angstroms et 1500 Angstroms.
